# EUROPEAN PATENT SPECIFICATION

(11) **EP 4 224 065 B1**
(45) Date of publication and mention of the grant of the patent: **12.06.2024**
(21) Application number: 23155147.4
(22) Date of filing: 06.02.2023
(51) Int. Cl.: F23R 3/28, F23D 14/64, F23R 3/36

(54) **MICRO-MIXER AND GAS TURBINE INCLUDING SAME**
MIKROMISCHER UND GASTURBINE DAMIT
MICRO-MÉLANGEUR ET TURBINE À GAZ LE COMPRENANT

(30) Priority: 07.02.2022 KR 20220015718
(43) Date of publication of application: 09.08.2023
(73) Proprietor: Doosan Enerbility Co., Ltd., Seongsan-gu Changwon-si, Gyeongsangnam-do 51711 (KR)
(72) Inventor: SHIN, Young Jun, Seongnam-si, Gyeonggi-do (KR); JEONG, Han Jin, Hanam-si, Gyeonggi-do (KR); CHO, Eun Seong, Busan (KR)
(74) Representative: BCKIP Part mbB

(56) References cited:
- US-A1- 2012 006 030
- US-A1- 2014 109 582
- US-A1- 2014 157 779
- DATABASE WPI Week 200024 Thomson Scientific, London, GB; AN 2000-276468 XP002809480, & JP 2000 074372 A (DOKURITSU GYOSEI HOJIN UCHU KOKU KENKYU) 14 March 2000 (2000-03-14)
- DATABASE WPI Week 201042 Thomson Scientific, London, GB; AN 2010-F58430 XP002809481, & CN 2 866 856 Y (CHINA SOUTHERN AVIATION DYNAMIC FORCE MACHINE CO) 7 February 2007 (2007-02-07)
- DATABASE WPI Week 201546 Thomson Scientific, London, GB; AN 2015-35168M XP002809482, & KR 101 527 718 B1 (KOREA INST MACHINERY & MATERIALS) 11 June 2015 (2015-06-11)

## Description

### Field of the Invention

The present invention relates to a micro-mixer and a gas turbine including the same.

### Background

A turbine is a machine that obtains rotational force with an impulsive force or reaction force using a flow of compressive fluids such as steam and gas, and such turbines include a steam turbine using steam, a gas turbine using high temperature combustion gas, or the like.

A gas turbine is a combustion engine in which a mixture of air compressed by a compressor and fuel is combusted to produce a high temperature gas, which drives a turbine. The gas turbine is used to drive electric generators, aircraft, ships, trains, or the like.

The gas turbine generally includes a compressor, a combustor, and a turbine. The compressor serves to intake external air, compress the air, and transfer the compressed air to the combustor. The compressed air compressed by the compressor has a high temperature and a high pressure. The combustor serves to mix compressed air from the compressor and fuel and combust the mixture of compressed air and fuel to produce combustion gases, which are discharged to the gas turbine. The combustion gases drive turbine blades in the turbine to produce power. The power generated through the above processes is applied to a variety of fields such as generation of electricity, driving of mechanical units, etc.

Fuel, which includes gaseous fuel and liquid fuel, is injected through nozzles disposed in respective combustors. In recent years, in order to suppress the emission of carbon dioxide, use of hydrogen fuel or a fuel containing hydrogen is recommended.

However, since hydrogen has a high combustion rate, when such fuels are burned with a gas turbine combustor, flames formed in the gas turbine combustor approach and heat the structure of the gas turbine combustor, thereby degrading the reliability of the gas turbine combustor.

In order to solve this problem, combustor nozzles having multiple tubes have been proposed, but such combustor nozzles have difficulty in uniformly mixing fuel and air and have problems in the stability of gas turbine combustors exposed to high temperatures.

The foregoing is intended merely to aid in the understanding of the background of the present invention, and is not intended to mean that the present invention falls within the purview of the related art that is already known to those skilled in the art.

Document US 2012 / 0 006 030 A1 describes an injection nozzle for a gas turbine comprising a nozzle assembly which includes a plurality of tube elements receiving fuel from a fuel inlet tube via an upstream fuel delivery plenum defined by a gap that exists between adjacent tube elements. The tube elements include a body that has an outlet extending beyond a circumferential wall of the nozzle assembly. The outlet, thus, protrudes from the circumferential wall and forms an interface zone with the circumferential wall in which flow vortices form that enhance mixing, when fluid is injected from the outlet.

### SUMMARY OF THE INVENTION

Accordingly, the present invention has been made keeping in mind the above problems occurring in the related art, and an objective of the present invention is to provide a micro-mixer and a gas turbine that reduce NOx emissions and prevent local heating of combustor components such as a liner or the like by improving fuel and air mixing characteristics with the provision of an injection part, an inclined injection hole, and a straight injection hole.

To this end, the invention provides a micro-mixer in accordance with claim 1 and a gas turbine in accordance with claim 11.

In an aspect of the present invention, there is provided a micro-mixer including: a plurality of fuel tubes through which air and fuel flow; a casing accommodating the plurality of fuel tubes therein; and a plurality of injection parts each formed as a pyramidal protrusion on one side of the casing and connected to a front end of the fuel tube to inject the air and the fuel, wherein each of the plurality of injection parts has an inclined injection hole formed obliquely with respect to an extension direction of the plurality of fuel tubes on at least one side of the pyramidal protrusion.

The plurality of injection parts may include a plurality of first medial injection parts adjacent to each other and a plurality of second lateral injection parts arranged around the first medial injection parts so as to be circumferentially adjacent to each other.

Each of the first medial injection parts may be provided with first inclined injection holes formed obliquely with respect to the extension direction of the fuel tube on respective sides thereof.

Each of the second lateral injection parts may be provided with second inclined injection holes formed obliquely with respect to the extension direction of the fuel tube on at least some of the respective sides, and a straight injection hole on the rest of the respective sides, the straight injection hole extending in a direction parallel to the extension direction of the fuel tube.

A diameter of the straight injection hole may be smaller than a diameter of the first inclined injection hole and a diameter of the second inclined injection hole.

In another aspect of the present invention, there is provided a gas turbine including: a compressor configured to compress air introduced from the outside, a combustor having a micro-mixer and configured to mix the compressed air compressed in the compressor and fuel and combust an air-fuel mixture, and a turbine including a plurality of turbine blades to be rotated by combustion gases combusted in the combustor, the micro-mixer including: a plurality of fuel tubes through which air and fuel flow; a casing accommodating the plurality of fuel tubes therein; and a plurality of injection parts each formed as a pyramidal protrusion on one side of the casing and connected to a front end of the fuel tube to inject the air and the fuel, wherein each of the plurality of injection parts has an inclined injection hole formed obliquely with respect to an extension direction of the plurality of fuel tubes on at least one side of the pyramidal protrusion.

A diameter of the inclined injection hole may be 3 to 5 mm.

An angle formed between the extension direction of the fuel tube and an extension direction of the inclined injection hole may be 30° to 60°.

The plurality of injection parts may include a plurality of first medial injection parts adjacent to each other and a plurality of second lateral injection parts arranged around the first medial injection parts so as to be circumferentially adjacent to each other.

Each of the first medial injection parts may be provided with first inclined injection holes formed obliquely with respect to the extension direction of the fuel tube on respective sides thereof.

Each of the second lateral injection parts may be provided with second inclined injection holes formed obliquely with respect to the extension direction of the fuel tube on at least some of the respective sides, and a straight injection hole on the rest of the respective sides, the straight injection hole extending in a direction parallel to the extension direction of the fuel tube.

A diameter of the straight injection hole may be smaller than a diameter of the first inclined injection hole and a diameter of the second inclined injection hole.

The straight injection hole may be disposed on a circumferentially outermost side of the second lateral injection part.

The injection part may have a triangular pyramidal shape or a quadrangular pyramidal shape.

The injection part may have a truncated triangular pyramidal shape or a truncated quadrangular pyramidal shape.

As described above, according to the present invention, the micro-mixer and the gas turbine can reduce NOx emissions and prevent local heating of combustor components such as a liner or the like by improving fuel and air mixing characteristics.

### BRIEF DESCRIPTION OF THE DRAWINGS

FIG. 1 is a view illustrating the interior of a gas turbine according to a first embodiment of the present invention;
FIG. 2 is a longitudinal sectional view illustrating a combustor of FIG. 1;
FIG. 3 is a perspective view illustrating a micro-mixer of the combustor shown in FIG. 2;
FIG. 4 is a front view illustrating the micro-mixer of the combustor shown in FIG. 2;
FIG. 5 is a cross-sectional view taken along line I-I' of FIG. 4;
FIG. 6 is an enlarged view of section A in FIG. 4;
FIG. 7 is a cross-sectional view taken along line II-II' of FIG. 6;
FIG. 8 is an enlarged view of section B in FIG. 4;
FIG. 9 is an enlarged view of section C in FIG. 4; and
FIG. 10 is a cross-sectional view taken along line III-III' of FIG. 9.

### DETAILED DESCRIPTION OF THE INVENTION

Hereinafter, exemplary embodiments of the present invention will be described in detail with reference to the accompanying drawings. However, it should be noted that the present invention is not limited thereto, and may include all of modifications, equivalents or substitutions within the scope of the appended claims.

Terms used herein are used to merely describe specific embodiments, and are not intended to limit the present invention. As used herein, an element expressed as a singular form includes a plurality of elements, unless the context clearly indicates otherwise. Further, it will be understood that the terms "comprising" or "including" specifies the presence of stated features, numbers, steps, operations, elements, parts, or combinations thereof, but does not preclude the presence or addition of one or more other features, numbers, steps, operations, elements, parts, or combinations thereof.

Hereinafter, preferred embodiments of the present invention will be described in detail with reference to the accompanying drawings. It is noted that like elements are denoted in the drawings by like reference symbols as whenever possible. Further, the detailed description of known functions and configurations that may obscure the present invention will be omitted. For the same reason, some of the elements in the drawings are exaggerated, omitted, or schematically illustrated.

Hereinafter, a gas turbine 1000 according to an embodiment of the present invention will be described.

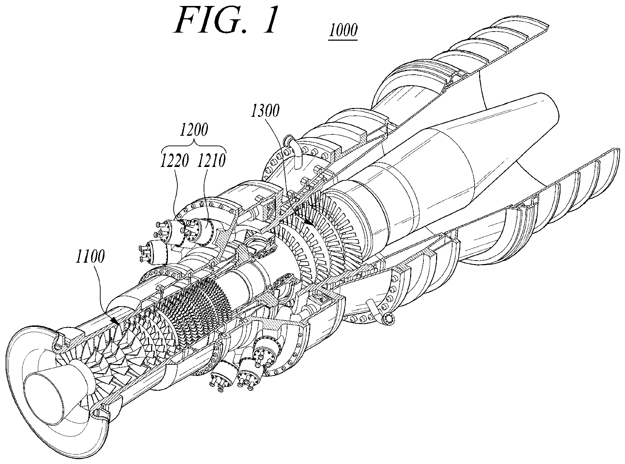

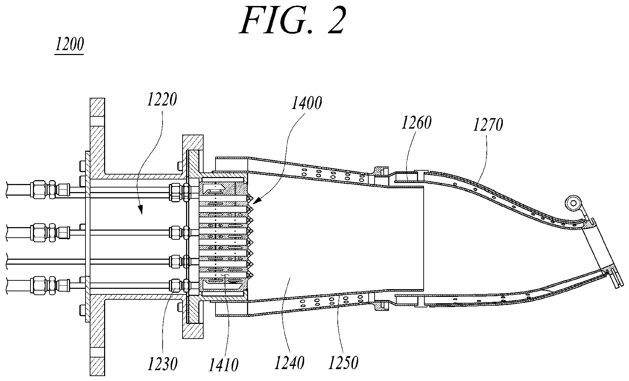

FIG. 1 is a view illustrating the interior of a gas turbine according to an embodiment of the present invention, and FIG. 2 is a longitudinal sectional view illustrating a combustor of FIG. 1.

An ideal thermodynamic cycle of a gas turbine 1000 according to the present embodiment follows a Brayton cycle. The Brayton cycle consists of four thermodynamic processes: isentropic compression (adiabatic compression), isobaric combustion, isentropic expansion (adiabatic expansion) and isobaric heat ejection. That is, in the Brayton cycle, atmospheric air is sucked and compressed into high pressure air, mixed gas of fuel and compressed air is combusted at constant pressure to discharge heat energy, heat energy of hot expanded combustion gas is converted into kinetic energy, and exhaust gases containing remaining heat energy is discharged to the outside. That is, gases undergo four thermodynamic processes: compression, heating, expansion, and heat ejection.

As illustrated in FIG. 1, the gas turbine 1000 employing the Brayton cycle includes a compressor 1100, a combustor 1200, and a turbine 1300. Although the following description will be described with reference to FIG. 1, the present invention may be widely applied to other turbine engines similar to the gas turbine 1000 illustrated in FIG. 1.

Referring to FIGS. 1 and 2, the compressor 1100 of the gas turbine 1000 sucks and compresses external air. The compressor 1100 may serve both to supply the compressed air by compressor blades to a combustor 1200 and to supply the cooling air to a high temperature region of the gas turbine 1000. Here, since the sucked air undergoes an adiabatic compression process in the compressor 1100, the air passing through the compressor 1100 has increased pressure and temperature.

The compressor 1100 is usually designed as a centrifugal compressor or an axial compressor, and the centrifugal compressor is applied to a small-scale gas turbine, whereas a multistage axial compressor 1100 is applied to a large-scale gas turbine 1000 illustrated in FIG. 1 since the large-scale gas turbine 1000 is required to compress a large amount of air.

The compressor 1100 is driven using a portion of the power output from the turbine 1300. To this end, as illustrated in FIG. 1, the rotary shaft of the compressor 1100 and the rotary shaft of the turbine 1300 are directly connected. In the case of the large-scale gas turbine engine 1000, almost half of the output produced by the turbine 1300 is consumed to drive the compressor 1100. Accordingly, improving the efficiency of the compressor 1100 has a direct effect on improving the overall efficiency of the gas turbine engine 1000.

On the other hand, the combustor 1200 serves to mix the compressed air supplied from an outlet of the compressor 1100 with fuel and combust the mixture at constant pressure to produce hot combustion gases. The combustor 1200 mixes the introduced compressed air with fuel and combusts the air-fuel mixture to produce high-energy, high-temperature and high-pressure combustion gases, and increases the temperature of the combustion gases to the heat resistant limit at which the combustor and turbine parts can withstand heat through an isobaric combustion process.

A plurality of combustors 1200 may be arranged in a housing formed in the form of a cell, and each of the combustors include a burner containing a fuel injection nozzle, a combustor liner forming a combustion chamber, and a transition piece that is a connection between the combustor and the turbine.

The combustor 1200 is disposed on the downstream of the compressor 1100 such that a plurality of burners 1220 is disposed along an annular combustor casing 1210. Each burner 1220 is provided with several combustion nozzles 1230, and fuel injected from the combustion nozzles 1230 is mixed with the compressed air in an appropriate ratio suitable for combustion. The fuel injected from the fuel nozzles 1230 is mixed with the compressed air and then enters the combustion chamber 1240.

Since the combustor 1200 has the highest-temperature environment in the gas turbine engine 1000, the combustor requires appropriate cooling. Referring to FIGS. 1 and 2, a duct assembly connecting the burner 1220 and the turbine 1300 so that a high temperature combustion gas flows therethrough, that is, a duct assembly composed of a liner 1250 and the transition piece 1260, and a flow sleeve 1270 is provided such that the compressed air flows along an outer surface of the duct assembly to the combustion nozzle 1230, so that the duct assembly heated by a high temperature combustion gas is properly cooled.

The combustor 1200 accommodates at least one micro-mixer 1400 for proper mixing of fuel and air.

High-temperature and high-pressure combustion gas produced by the combustor 1200 is supplied to the turbine 1300 through the duct assembly.

The turbine 1300 includes a plurality of turbine blades rotated by the combustion gas combusted in the combustor 1200. In the turbine 1300, the combustion gas adiabatically expands and provides an impact and reaction force to turbine blades radially arranged on the rotary shaft of the turbine 1300 so that thermal energy of the combustion gas is converted into a mechanical energy in the rotation of the rotary shaft. A portion of the mechanical energy obtained from the turbine 1300 is used to compress air in the compressor, and the rest is used as effective energy for driving a generator to produce power, for example.

Hereinafter, a micro-mixer 1400 according to an embodiment of the present invention will be described.

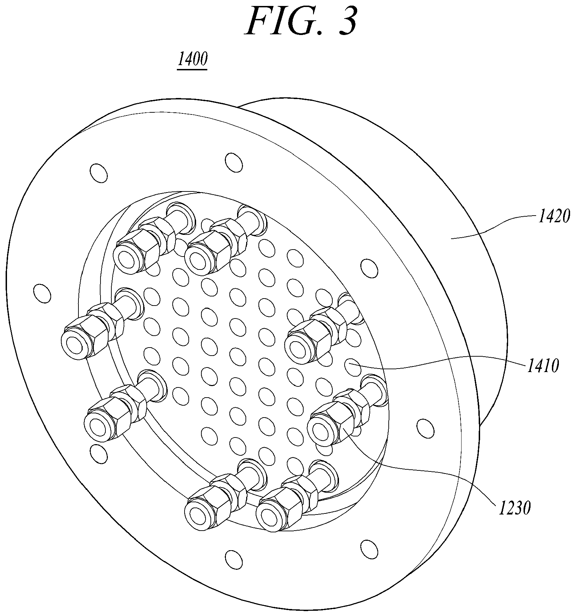

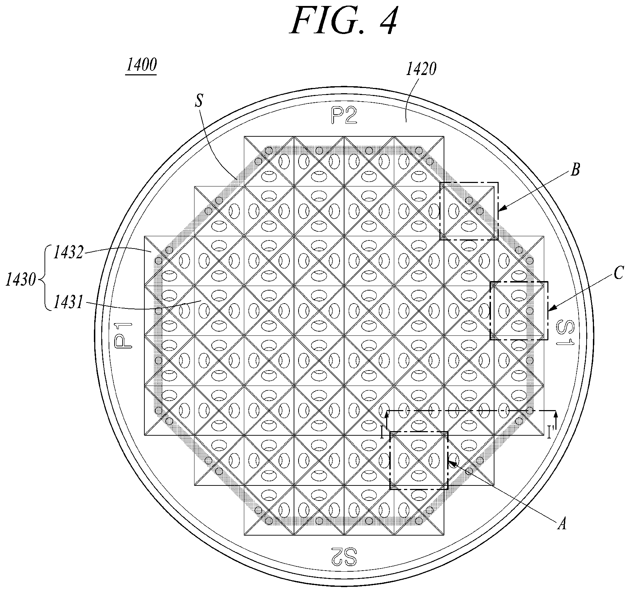

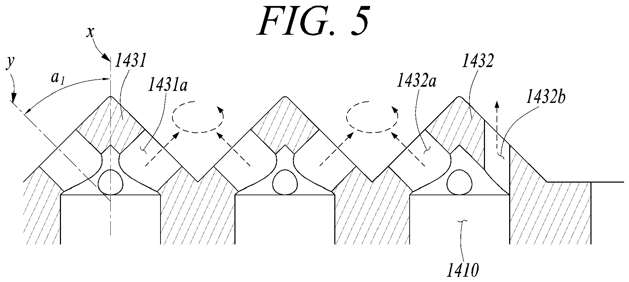

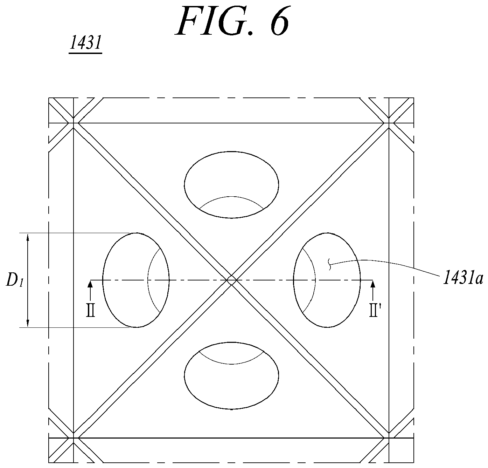

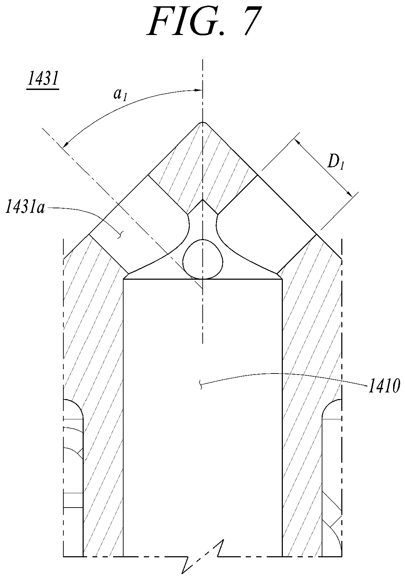

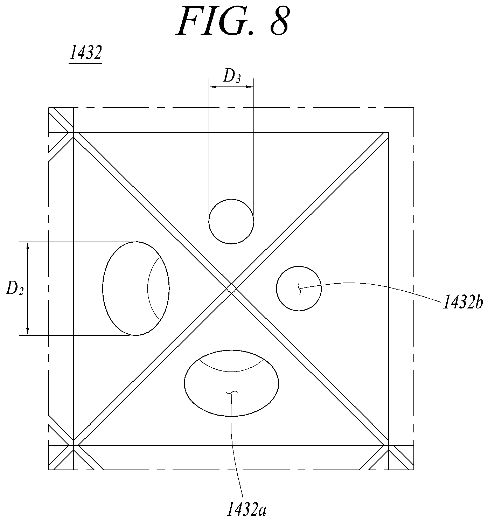

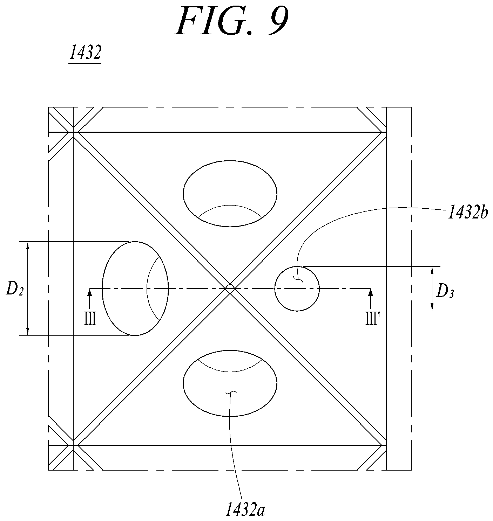

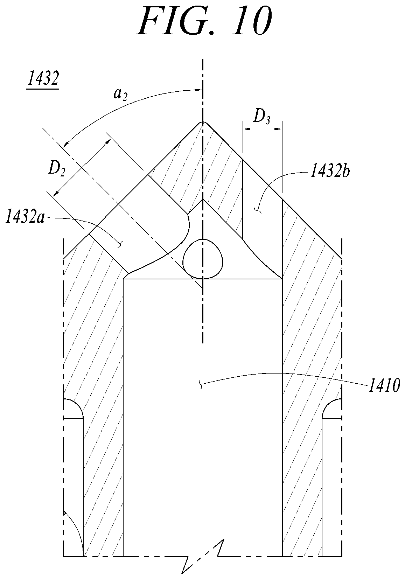

FIG. 3 is a perspective view illustrating a micro-mixer of FIG. 2. FIG. 4 is a front view illustrating the micro-mixer of FIG. 2. FIG. 5 is a cross-sectional view taken along line I-I' of FIG. 4. FIG. 6 is an enlarged view of section A in FIG. 4. FIG. 7 is a cross-sectional view taken along line II-II' of FIG. 6. FIG. 8 is an enlarged view of section B in FIG. 4. FIG. 9 is an enlarged view of section C in FIG. 4. And, FIG. 10 is a cross-sectional view taken along line III-III' of FIG. 9.

Referring to FIGS. 3 to 10, the micro-mixer 1400 according to the present invention includes fuel tubes 1410, a casing 1420, and injection parts 1430. The micro-mixer 1400 facilitates mixing of compressed air and fuel supplied through a combustion nozzle 1230 to improve the mixing characteristics of the fuel and air, thereby reducing the amount of carbon monoxide and nitrogen oxide emissions.

Here, it can be understood by the ordinary skilled person in the art associated with this embodiment that other conventional components may be further included in the micro-mixer 1400 in addition to the components illustrated in FIGS. 3 to 10.

The fuel tube 1410 may be a passage through which air and fuel flow. A plurality of fuel tubes 1410 may be formed to form several small flames. The fuel tubes 1410 may be spaced apart from each other in the casing 1420 to be described later and may be formed to be parallel to each other. The diameter of the fuel tube 1410 may vary to finely inject fuel and air.

The casing 1420 accommodates the plurality of fuel tubes 1410 therein. The casing 1420 is provided on the front end thereof with injection parts to be described below so that air and fuel flowing through the fuel tubes 1410 are injected into the combustion chamber 1240 through the injection parts. The front end of the casing 1420 may be referred to as a downstream end of the casing 1420. The casing 1420 may be provided on the rear end thereof with a plurality of connection holes (not shown) to which the combustion nozzles 1230 are connected (see FIG. 3).

The casing 1420 may have a cylindrical body having an internal space in which the plurality of fuel tubes 1410 may be located. Since the casing 1420 comes into direct contact with flames generated by fuel combustion, the casing may be made of a material that has sufficient heat resistance to withstand high temperatures and sufficient durability to prevent deformation occurring due to combustion vibration. However, the shape and material of the casing 1420 are not limited thereto, and the casing may have various shapes and materials.

According to an embodiment, the injection parts 1430 may include first medial injection parts 1431 and second lateral injection parts 1432. The injection parts are formed on one side of the casing 1420 and are connected with the front ends of the fuel tubes 1410 so that air and fuel are injected therethrough. The front ends of the fuel tubes 1410 may be referred to downstream ends of the fuel tubes 1410. Each of the injection parts 1430 protrudes in a pyramidal shape from the casing 1420 toward the downstream direction. Each of the injection parts 1430 includes an inclined injection hole formed obliquely with respect to an extension direction of the fuel tube 1410 on at least one side of the pyramidal shape. The extension direction of the fuel tube 1410 may be referred to as the downstream direction, a longitudinal direction, or an axial direction.

An angle between the extension direction of the fuel tube 1410 (the direction X in FIG. 5) and the extension direction of the inclined injection hole (the direction Y in FIG. 5) may vary depending on dynamic characteristics for reducing combustion vibration.

According to an embodiment, the inclined injection hole may include a first inclined injection hole 1431a and a second inclined injection hole 1432a. In addition, the pyramidal shape of the injection part 1430 may be in a form of a pyramidal shape, a truncated pyramid shape, or a hemispherical shape in which cross-sectional areas decrease from the bottom to the top.

That is, since the injection part 1430 includes the inclined injection hole obliquely extending as a pyramidal protrusion, the fuel injected through the inclined injection hole collides with fuel injected through the surrounding inclined injection hole of an adjacent injection part to form a recirculation area (see FIG. 5).

Accordingly, adjacent injected flows of fuel may collide with each other to form the recirculation area and thus, the residence time is increased, thereby improving mixing of air and fuel. As the mixing rate of fuel and air increases, uniform combustion can be ensured so that carbon monoxide and nitrogen oxides (NOx) emissions, which are legally regulated, can be reduced.

In addition, according to an embodiment, the second lateral injection parts 1432 of the injection part 1430 may include straight injection holes 1432b disposed on circumferentially outermost sides thereof. The straight injection holes 1432b may be formed such that the flow direction of the straight injection holes 1432b is to be parallel to the extension direction of the fuel tube 1410 (the direction X). Since the straight injection holes 1432b are disposed on the circumferentially outermost sides of the second lateral injection parts, local heating of the side liner 1250 or the like and resultant thermal damage to the combustor due to high temperature can be prevented.

That is, in the outermost portion of the injection part 1430, the fuel may be injected in a straight line through the straight injection holes 1432b instead of the first and second inclined injection holes 1431a and 1432a, thereby preventing flame concentration on a lateral side (see FIG. 5). In addition, flames generated due to combustion of fuel injected through the first inclined injection holes 1431a and the second inclined injection holes 1432a may be prevented from reaching the lateral side of the combustion chamber 1240.

According to an embodiment, the injection part 1430 may have a triangular pyramidal shape or a quadrangular pyramidal shape. According to an embodiment, the injection part 1430 may have a truncated triangular pyramidal shape or a truncated quadrangular pyramidal shape. That is, although the injection part 1430 has a quadrangular pyramidal shape as illustrated in FIG. 4, the shape of the protrusion of the injection part 1430 may vary, according to embodiments, depending on conditions such as a required separation distance between the injection parts 1430, an angle of the injection hole, and a separation distance between the injection holes.

According to an embodiment, the first medial injection parts 1431 each may include a first inclined injection hole 1431a. The first medial injection parts 1431 may mean centrally positioned injection parts among the plurality of injection parts 1430. In other words, the first medial injection parts 1431 may refer to relatively centrally located injection parts from among the plurality of injection parts, other than injection parts located at peripheral positions of the plurality of injection parts. The first medial injection part 1431 may only have the first inclined injection hole 1431a without a straight injection hole 1432b described later.

The first medial injection parts 1431 may be disposed adjacent to each other. Since the first medial injection parts 1431 are disposed adjacent to each other as described above, a flow of fuel injected from the first inclined injection hole 1431a may collide with a flow of fuel injected from a first inclined injection hole 1431a of adj acent first injection part 1431 so that recirculation may occur.

The first medial injection part 1431 may include a first inclined injection hole 1431a obliquely formed from an extension direction of the fuel tube 1410 on each side thereof (see FIGS. 5 and 6). According to an embodiment, on the first medial injection part 1431, a first inclined injection hole may be formed on each protruding plane of the pyramid shape of the first medial injection part 1431.

The diameter D1 of the first inclined injection hole 1431a may be 3 to 5 mm. The diameter D1 of the first inclined injection hole may be determined depending on injection pressure and injection speed of fuel.

When the diameter D1 of the first inclined injection hole 1431a is less than 3 mm, the injection speed of the injected fuel may be excessively high, so recirculation may not be performed properly despite collision between the flows of injected fuel. In addition, due to an excessively high injection speed, combustion flames may come into direct contact with the liner 1250, which is located at the lateral side of the combustion chamber 1240, through a flow of fuel injected in a straight direction from the straight injection hole 1432b, causing a risk of damage due to local heating.

When the diameter D1 of the first inclined injection hole 1431a is greater than 5 mm, the injection speed of the injected fuel may be excessively low. As a result, a recirculation effect may be mitigated due to mutual collision between flows of injected fuel. Accordingly, the diameter D1 of the first inclined injection hole may be preferably 3 to 5 mm, which is an extent in which the recirculation properly occurs due to collision between flows of injected fuel and combustion flames do not come into direct contact with the lateral side of the combustion chamber 1240.

According to an embodiment, the extension direction of the first inclined injection hole 1431a may be inclined at a first inclination angle of 30° to 60° with respect to the extension direction of the fuel tube 1410.

When the first inclination angle a1, which is an angle defined by the extension direction of the fuel tube 1410 and the extension direction of the first inclined injection hole 1431a, is less than 30°, collision between flows of injected fuel may not smoothly performed, and recirculation mixing of fuel and air may not be performed properly.

When the first inclination angle a1, which is an angle defined by the extension direction of the fuel tube 1410 and the extension direction of the first inclined injection hole 1431a, is greater than 60°, recirculation due to collision between flows of injected fuel may occur at a position that is too close to the injection part 1430, causing a risk of damage to the injection part 1430 due to flames caused by the injected fuel. Accordingly, it is preferable that the first inclination angle a1 is 30° to 60° so that the collision between flows of injected fuel can be smoothly achieved and flames can be generated at a position that is also not too close to the injection part 1430.

According to an embodiment, the diameter D1 of the first inclined injection hole 1431a may be larger than that of a straight injection hole 1432b to be described later. According to an embodiment, since the diameter of a straight injection hole 1432b is smaller than the diameter D1 of the first inclined injection hole 1431a, the injection speed of the fuel injected from the straight injection hole 1432b may be faster than the injection speed of the fuel injected from the first inclined injection hole 1431a. If the injection speed of the fuel injected from the first inclined injection hole 1431a is faster than the injection speed of the fuel injected from the straight injection hole 1432b, then the fuel injected from the first inclined injection hole 1431a may flow through or flow across the fuel injected from the straight injection hole 1432b and, thereby, flames generated by the fuel may come into direct contact with components such as the liner 1250, which is a lateral side of the combustion chamber 1240, causing thermal damage thereto due to local heating. However, according to an embodiment of the present invention, since the injection speed of fuel injected from the straight injection hole 1432b is faster than that of fuel injected from the first inclined injection hole 1431a, such problem may be prevented.

According to an embodiment, the second lateral injection part 1432 may include a second inclined injection hole 1432a and a straight injection hole 1432b. The second lateral injection parts 1432 may be disposed adjacent to each other on the circumferentially outermost side of the injection parts 1430. In other words, the second lateral injection parts 1432 may be disposed at peripheral positions at the downstream end of the casing 1420 when the casing 1420 is viewed from the downstream end of the micro-mixer 1400, such that the second lateral injection parts 1432 generally surround the first lateral injection parts 1431. Since the second lateral injection parts 1432 each having the straight injection hole are disposed adjacent to each other on the circumferentially outermost side of the injection parts 1430, flames by fuel combustion may be prevented from coming into contact with the lateral side of the combustion chamber 1240.

The second inclined injection hole 1432a may be formed on at least some sides of the pyramid shape of the second lateral injection parts 1432 so as to be inclined with respect to the extension direction of the fuel tube 1410 (see FIGS. 8 and 10).

According to an embodiment, the diameter D2 of the second inclined injection hole 1432a may be 3 to 5 mm. The diameter D2 of the second inclined injection hole may be determined depending on injection pressure and injection speed of fuel.

When the diameter D2 of the second inclined injection hole 1432a is less than 3 mm, the injection speed of the injected fuel may be excessively high, so that recirculation may not be performed properly despite collision between the flows of injected fuel. In addition, due to an excessively high injection speed, combustion flames may come into direct contact with the liner 1250, which is located at the lateral side of the combustion chamber 1240, through or across a flow of fuel injected in a straight direction from the straight injection hole 1432b, causing a risk of damage due to local heating.

When the diameter D2 of the second inclined injection hole 1432a is greater than 5 mm, the injection speed of the injected fuel may be excessively low. As a result, a recirculation effect may be mitigated due to mutual collision between flows of injected fuel. Accordingly, the diameter D2 of the second inclined injection hole may be preferably 3 to 5 mm, in which recirculation may properly occur due to collision between flows of injected fuel and direct contact of combustion flames with the lateral side of the combustion chamber 1240 may be properly prevented.

According to an embodiment, the extension direction of the second inclined injection hole 1432a may be inclined at a second inclination angle of 30° to 60° with respect to the extension direction of the fuel tube 1410.

The second inclination angle a2 may be defined by the extension direction of the fuel tube 1410 and the extension direction of the second inclined injection hole 1432a. If the second inclination angle a2 is less than 30°, collision between flows of injected fuel may not be smoothly performed, and recirculation mixing of fuel and air may not be performed properly.

When the second inclination angle a2 is greater than 60°, recirculation due to collision between flows of injected fuel may occur at a position that is too close to the injection part 1430, causing a risk of damage to the injection part 1430 due to flames caused by the injected fuel. Accordingly, it is preferable that the second inclination angle a1 is between 30° and 60° so that the collision between flows of injected fuel can be smoothly achieved and flames can be generated at a position that is also not too close to the injection part 1430.

According to an embodiment, the diameter D2 of the second inclined injection hole 1432a may be larger than that of the straight injection hole 1432b to be described later. According to an embodiment, since the diameter of a straight injection hole 1432b is smaller than the diameter D2 of the second inclined injection hole 1432a, the injection speed of the fuel injected from the straight injection hole 1432b may be faster than the injection speed of the fuel injected from the second inclined injection hole 1432a. If the injection speed of the fuel injected from the second inclined injection hole 1432a is faster than the injection speed of the fuel injected from the straight injection hole 1432b, then the fuel injected from the second inclined injection hole 1432a may flow through or flow across the fuel flow injected from the straight injection hole 1432b and, thereby, flames generated by the fuel may come into direct contact with components such as the liner 1250, which is a lateral side of the combustion chamber 1240, causing thermal damage thereto due to local heating. However, according to an embodiment of the present invention, since the injection speed of fuel injected from the straight injection hole 1432b is faster than that of fuel injected from the second inclined injection hole 1432a, such problem may be prevented.

The straight injection hole 1432b may be formed on the other side of the respective sides of the second lateral injection part 1432 of the injection part 1430 where the second inclined injection hole 1432a is formed, so as to extend in a direction parallel to the extension direction of the fuel tube 1410 (see FIGS. 8 and 10).

The diameter D3 of the straight injection hole 1432b may be smaller than the diameters D1 and D2 of the first and second inclined injection holes. Since the diameter D3 of the straight injection hole 1432b is smaller than the diameters D1 and D2 of the first and second inclined injection holes, the injection speed of fuel injected from the straight injection hole 1432b may be faster than those of fuel injected from the first and second inclined injection holes. If the injection speed of the fuel injected from the first and second inclined injection holes 1431a and 1432a is faster than the injection speed of the fuel injected from the straight injection hole 1432b, then the fuel injected from the first and second inclined injection holes 1431a and 1432a may flow through or flow across the fuel flow injected from the straight injection hole 1432b and, thereby, flames generated by the fuel may come into direct contact with components such as the liner 1250, which is a lateral side of the combustion chamber 1240, causing thermal damage thereto due to local heating. However, since the diameter D3 of the straight injection hole 1432b is smaller than the diameters D1 and D2 of the first and second inclined injection holes, such problem may be prevented.

The straight injection holes 1432b may be disposed along the outermost periphery of the plurality of injection parts 1430. The straight injection holes 1432b may be disposed along an outermost straight injection zone S of the injection parts 1430. If the inclined injection holes are disposed in the straight injection zone S, fuel may be injected toward a sidewall of the combustion chamber 1240. Since this causes a risk of direct contact of combustion flames with the sidewall of the combustion chamber 1240, resulting in thermal damage due to local heating, it is preferred that only the straight injection holes 1432b are disposed in the straight injection zone S.

While the embodiments of the present invention have been described, it will be apparent to those skilled in the art that various modifications and variations can be made in the present invention through addition, change, omission, or substitution of components without departing from the scope of the invention as set forth in the appended claims. Also, it is noted that any one feature of an embodiment of the present invention described in the specification may be applied to another embodiment of the present invention.

## Claims

1. A micro-mixer (1400) for a combustor (1200) of a gas turbine, comprising:
a plurality of fuel tubes (1410) through which air and fuel flow;
a casing (1420) accommodating the plurality of fuel tubes (1410) therein; and
a plurality of injection parts (1430) each formed as a pyramidal protrusion on one side of the casing (1420) and connected to a front end of one of the plurality of fuel tube to inject the air and the fuel, wherein each of the plurality of injection parts (1430) has an inclined injection hole (1431a, 1432a) formed obliquely with respect to an extension direction of the plurality of fuel tubes (1410) on at least one side of the pyramidal protrusion.

2. The micro-mixer according to claim 1, wherein a diameter of the inclined injection hole (1431a, 1432a) is 3 to 5 mm.

3. The micro-mixer according to claim 1 or 2, wherein an angle defined between the extension direction of the fuel tube(1410) and an extension direction of the inclined injection hole is 30° to 60°.

4. The micro-mixer according to any one of claims 1 to 3, wherein the plurality of injection parts (1430) includes a plurality of first medial injection parts (1431) adjacent to each other and a plurality of second lateral injection parts (1432) arranged around the first medial injection parts (1431) to be circumferentially adjacent to each other.

5. The micro-mixer according to claim 4, wherein each of the first medial injection parts (1431) is provided with first inclined injection holes (1431a) formed obliquely with respect to the extension direction of the fuel tube on respective sides thereof.

6. The micro-mixer according to claim 4 or 5, wherein each of the second lateral injection parts (1432) is provided with second inclined injection holes (1432a) formed obliquely with respect to the extension direction of the fuel tube on at least some of the respective sides, and a straight injection hole (1432b) on the rest of the respective sides, the straight injection hole (1432b) extending in a direction parallel to the extension direction of the fuel tube.

7. The micro-mixer according to claim 6, wherein a diameter of the straight injection hole (1432b) is smaller than a diameter of the first inclined injection hole and a diameter of the second inclined injection hole (1432a).

8. The micro-mixer according to claim 6 or 7, wherein the straight injection hole (1432b) is disposed on a circumferentially outermost side of the second lateral injection part (1432).

9. The micro-mixer according to any one of claims 1 to 8, wherein the injection part has a triangular pyramidal shape or a quadrangular pyramidal shape.

10. The micro-mixer according to any one of claims 1 to 9, wherein the injection part has a truncated triangular pyramidal shape or a truncated quadrangular pyramidal shape.

11. A gas turbine comprising:
a compressor (1100) configured to compress air introduced from the outside;
a combustor (1200) having a micro-mixer (1400) in accordance with claim 1, the combustor (1200) being configured to mix the compressed air compressed in the compressor and fuel and combust an air-fuel mixture; and
a turbine (1300) including a plurality of turbine blades to be rotated by combustion gases combusted in the combustor.

12. The gas turbine according to claim 11, wherein the plurality of injection parts (1430) include a plurality of first medial injection parts (1431) adjacent to each other and a plurality of second lateral injection parts (1432) arranged around the first medial injection parts (1431) to be circumferentially adjacent to each other.

13. The gas turbine according to claim 12, wherein each of the first medial injection parts (1431) is provided with first inclined injection holes (1431a) formed obliquely with respect to the extension direction of the fuel tube on respective sides thereof.

14. The gas turbine according to claim 12 or 13, wherein each of the second lateral injection parts (1432) is provided with second inclined injection holes (1432a) formed obliquely with respect to the extension direction of the fuel tube on at least some of the respective sides, and a straight injection hole (1432b) on the rest of the respective sides, the straight injection hole (1432b) extending in a direction parallel to the extension direction of the fuel tube.

15. The gas turbine according to claim 14, wherein a diameter of the straight injection hole (1432b) is smaller than a diameter of the first inclined injection hole and a diameter of the second inclined injection hole (1432a).

## Patentansprüche

1. Mikro-Mischer (1400) für eine Brennkammer (1200) einer Gasturbine, umfassend:
eine Mehrzahl von Brennstoffrohren (1410), durch die Luft und Brennstoff strömt;
ein Gehäuse (1420), das für die Mehrzahl von Brennstoffrohren (1410) darin Platz bietet; und
eine Mehrzahl von Einspritzteilen (1430), die jeweils als ein pyramidenförmiger Vorsprung auf einer Seite des Gehäuses (1420) gebildet und mit einem vorderen Ende eines von der Mehrzahl von Brennstoffrohren verbunden sind, um die Luft und den Brennstoff einzuspritzen, wobei jedes von der Mehrzahl von Einspritzteilen (1430) ein geneigtes Einspritzloch (1431a, 1432a) hat, das schräg mit Bezug auf eine Erstreckungsrichtung von der Mehrzahl von Brennstoffrohren (1410) auf wenigstens einer Seite des pyramidenförmigen Vorsprungs gebildet ist.

2. Mikro-Mischer nach Anspruch 1, wobei ein Durchmesser des geneigten Einspritzlochs (1431a, 1432a) 3 bis 5 mm ist.

3. Mikro-Mischer nach Anspruch 1 oder 2, wobei ein Winkel, der zwischen der Erstreckungsrichtung des Brennstoffrohrs (1410) und einer Erstreckungsrichtung des geneigten Einspritzlochs 30 bis 60° ist.

4. Mikro-Mischer nach einem der Ansprüche 1 bis 3, wobei die Mehrzahl von Einspritzteilen (1430) eine Mehrzahl von ersten medialen Einspritzteilen (1431), die angrenzend zueinander sind, und eine Mehrzahl von zweiten lateralen Einspritzteilen (1432) beinhaltet, die um die ersten medialen Einspritzteile (1431) herum angeordnet sind, um umlaufend angrenzend zueinander zu sein.

5. Mikro-Mischer nach Anspruch 4, wobei jedes der ersten medialen Einspritzteile (1431) mit ersten geneigten Einspritzlöchern (1431a) versehen ist, die schräg mit Bezug zu der Erstreckungsrichtung des Brennstoffrohrs auf entsprechenden Seiten davon gebildet sind.

6. Mikro-Mischer nach Anspruch 4 oder 5, wobei jedes der zweiten lateralen Einspritzteile (1432) mit zweiten geneigten Einspritzlöchern (1432a) versehen ist, die schräg mit Bezug auf die Erstreckungsrichtung des Brennstoffrohrs auf wenigstens einigen der entsprechenden Seiten gebildet sind, und mit einem geraden Einspritzloch (1432b) auf dem Rest der entsprechenden Seiten, wobei sich das gerade Einspritzloch (1432b) in eine Richtung parallel zu der Erstreckungsrichtung des Brennstoffrohrs erstreckt.

7. Mikro-Mischer nach Anspruch 6, wobei ein Durchmesser des geraden Einspritzlochs (1432b) kleiner ist als ein Durchmesser des ersten geneigten Einspritzlochs und ein Durchmesser des zweiten geneigten Einspritzlochs (1432a).

8. Mikro-Mischer nach Anspruch 6 oder 7, wobei das gerade Einspritzloch (1432b) auf einer umfänglich äußersten Seite des zweiten lateralen Einspritzteils (1432) eingerichtet ist.

9. Mikro-Mischer nach einem der Ansprüche 1 bis 8, wobei das Einspritzteil eine dreieckige pyramidenförmige Gestalt oder eine viereckige pyramidenförmige Gestalt hat.

10. Mikro-Mischer nach einem der Ansprüche 1 bis 9, wobei das Einspritzteil eine kegelstumpfartige dreieckige pyramidenförmige Gestalt oder eine kegelstumpfartige viereckige pyramidenförmige Gestalt hat.

11. Gasturbine, umfassend:
einen Kompressor (1100), der ausgebildet ist, um von der Außenseite eingeführte Luft zu komprimieren;
eine Brennkammer (1200), die einen Mikro-Mischer (1400) in Übereinstimmung mit Anspruch 1 hat, wobei die Brennkammer (1200) ausgebildet ist, um die komprimierte Luft, die in dem Kompressor komprimiert ist, und Brennstoff zu mischen und ein Luft-BrennstoffGemisch zu verbrennen; und
eine Turbine (1300), die eine Mehrzahl von Turbinenschaufeln beinhaltet, um durch Verbrennungsgase, die in der Brennkammer verbrannt sind, rotierbar zu sein.

12. Gasturbine nach Anspruch 11, wobei die Mehrzahl von Einspritzteilen (1430) eine Mehrzahl von ersten medialen Einspritzteilen (1431), die angrenzend zueinander sind, und eine Mehrzahl von zweiten lateralen Einspritzteilen (1432) beinhaltet, die um die ersten medialen Einspritzteile (1431) herum angeordnet sind, um umfänglich angrenzend zueinander zu sein.

13. Gasturbine nach Anspruch 12, wobei jedes der ersten medialen Einspritzteile (1431) mit ersten geneigten Einspritzlöchern (1431a) versehen ist, die schräg mit Bezug auf die Erstreckungsrichtung des Brennstoffrohrs auf entsprechenden Seiten davon gebildet sind.

14. Gasturbine nach Anspruch 12 oder 13, wobei jedes der zweiten lateralen Einspritzteile (1432) mit zweiten geneigten Einspritzlöchern (1432a) versehen ist, die schräg mit Bezug auf die Erstreckungsrichtung des Brennstoffrohrs auf wenigstens einigen der entsprechenden Seiten gebildet sind, und mit einem geraden Einspritzloch (1432b) auf dem Rest der entsprechenden Seiten, wobei sich das gerade Einspritzloch (1432b) in einer Richtung parallel zu der Erstreckungsrichtung des Brennstoffrohrs erstreckt.

15. Gasturbine nach Anspruch 14, wobei ein Durchmesser des geraden Einspritzlochs (1432b) kleiner ist als ein Durchmesser des ersten geneigten Einspritzlochs und ein Durchmesser des zweiten geneigten Einspritzlochs (1432a).

## Revendications

1. Micro-mélangeur (1400) pour une chambre de combustion (1200) d'une turbine à gaz, comprenant :
une pluralité de tubes de combustible (1410) par lesquels s'écoulent de l'air et un combustible ;
un carter (1420) contenant la pluralité de tubes de combustible (1410) ;
une pluralité de pièces d'injection (1430) formées chacune comme saillie pyramidale sur un côté du carter (1420), et raccordées à une extrémité avant d'un tube de la pluralité de tubes de combustible pour injecter l'air et le combustible, chaque pièce de la pluralité de pièces d'injection (1430) comprenant un orifice d'injection (1431a, 1432a) incliné formé obliquement dans une direction d'extension de la pluralité de tubes de combustible (1410) sur au moins une face de la saillie pyramidale.

2. Micro-mélangeur selon la revendication 1, où le diamètre de l'orifice d'injection incliné (1431a, 1432a) est compris entre 3 et 5 mm.

3. Micro-mélangeur selon la revendication 1 ou la revendication 2, où un angle défini entre la direction d'extension du tube de combustible (1410) et la direction d'extension de l'orifice d'injection incliné est compris entre 30° et 60°.

4. Micro-mélangeur selon l'une des revendications 1 à 3, où la pluralité de pièces d'injection (1430) comprend une pluralité de premières pièces d'injection centrales (1431) adjacentes les unes aux autres et une pluralité de deuxièmes pièces d'injection latérales (1432) disposées autour des premières pièces d'injection centrales (1431) de manière à être circonférentiellement adjacentes les unes aux autres.

5. Micro-mélangeur selon la revendication 4, où chacune des premières pièces d'injection centrales (1431) est pourvue de premiers orifices d'injection inclinés (1431a) formés obliquement par rapport à la direction d'extension du tube de combustible sur des faces respectives de celles-ci.

6. Micro-mélangeur selon la revendication 4 ou la revendication 5, où chacune des deuxièmes pièces d'injection latérales (1432) est pourvue de deuxièmes orifices d'injection inclinés (1432a) formés obliquement par rapport à la direction d'extension du tube de combustible sur au moins quelques-unes des faces respectives, et d'un orifice d'injection rectiligne (1432b) sur le reste des faces respectives, ledit orifice d'injection rectiligne (1432b) s'étendant dans une direction parallèle à la direction d'extension du tube de combustible.

7. Micro-mélangeur selon la revendication 6, où le diamètre de l'orifice d'injection rectiligne (1432b) est inférieur au diamètre du premier orifice d'injection incliné et au diamètre du deuxième orifice d'injection incliné (1432a).

8. Micro-mélangeur selon la revendication 6 ou la revendication 7, où l'orifice d'injection rectiligne (1432b) est disposé on sur la face circonférentiellement extérieure de la deuxième pièce d'injection latérale (1432).

9. Micro-mélangeur selon l'une des revendications 1 à 8, où la pièce d'injection a une forme en pyramide triangulaire ou quadrangulaire.

10. Micro-mélangeur selon l'une des revendications 1 à 9, où la pièce d'injection a une forme en pyramide triangulaire tronquée ou en pyramide quadrangulaire tronquée.

11. Turbine à gaz, comprenant :
un compresseur (1100) prévu pour comprimer l'air introduit de l'extérieur ;
une chambre de combustion (1200) comprenant un micro-mélangeur (1400) selon la revendication 1, ladite chambre de combustion (1200) étant prévue pour mélanger l'air comprimé dans le compresseur et le combustible, et pour brûler un mélange air-combustible ; et
une turbine (1300) comprenant une pluralité d'aubes de turbine entraînées en rotation par les gaz de combustion brûlés dans la chambre de combustion.

12. Turbine à gaz selon la revendication 11, où la pluralité de pièces d'injection (1430) comprend une pluralité de premières pièces d'injection centrales (1431) adjacents les unes aux autres et une pluralité de deuxièmes pièces d'injection latérales (1432) disposées autour des premières pièces d'injection centrales (1431) de manière à être circonférentiellement adjacentes les unes aux autres.

13. Turbine à gaz selon la revendication 12, où chacune des premières pièces d'injection centrales (1431) est pourvue de premiers orifices d'injection inclinés (1431a) formés obliquement par rapport à la direction d'extension du tube de combustible sur des faces respectives de celles-ci.

14. Turbine à gaz selon la revendication 12 ou la revendication 13, où chacune des deuxièmes pièces d'injection latérales (1432) est pourvue de deuxièmes orifices d'injection inclinés (1432a) formés obliquement par rapport à la direction d'extension du tube de combustible sur au moins quelques-unes des faces respectives, et d'un orifice d'injection rectiligne (1432b) sur le reste des faces respectives, ledit orifice d'injection rectiligne (1432b) s'étendant dans une direction parallèle à la direction d'extension du tube de combustible.

15. Turbine à gaz selon la revendication 14, où le diamètre de l'orifice d'injection rectiligne (1432b) est inférieur au diamètre du premier orifice d'injection incliné et au diamètre du deuxième orifice d'injection incliné (1432a).
